# EUROPÄISCHE PATENTANMELDUNG

(11) **EP 4 480 721 A1**
(43) Veröffentlichungstag der Anmeldung: **25.12.2024**
(21) Anmeldenummer: 24171259.5
(22) Anmeldetag: 19.04.2024
(51) Int. Cl.: B60D 1/01, B60D 1/60, B62D 53/08

(54) **HAUBENVORRICHTUNG FÜR SATTELKUPPLUNG**

(30) Priorität: 20.06.2023 DE 102023116036
(71) Anmelder: Karasavvidis, Chrysostomos, 90439 Nürnberg (DE)
(72) Erfinder: KARASAVVIDIS, Chrysostomos, 90439 Nürnberg (DE)
(74) Vertreter: Götz, Gudrun Veronika

(57) **Zusammenfassung**

Die Erfindung betrifft eine Haubenvorrichtung (100) für eine Sattelkupplung (300), insbesondere als Witterungsschutz für eine Sattelkupplung (300), wobei die Sattelkupplung (300) eine Sattelplatte (310) mit einer Aufnahme (314) für einen Königszapfen eines Aufliegers umfasst. Die Haubenvorrichtung (100) weist eine Haube (110) mit einer im Wesentlichen geschlossenen Haubenplatte (111) zum oberseitigen Abdecken der Sattelplatte (310) und vorzugsweise mit einer Umrandung (112) zum Umgeben der Sattelplatte (310) und eine Haltevorrichtung (120) zum Koppeln der Haube (110) mit der Aufnahme (314) auf. Die Haltevorrichtung (120) wiederrum weist, ein oder mehrere obere Haltemittel (130) zum Halten oder Hintergreifen der Haube (110), ein oder mehrere untere Haltemittel (140) zum Halten oder Hintergreifen der Sattelplatte (310) und ein oder mehrere Verbindungsmittel (150) zum Verbinden der oberen Haltemittel (130) mit den unteren Haltemitteln (140) und zum Bereitstellen und/oder Überbrücken eines Abstands (a) zwischen der Platte (111) und der Sattelplatte (310) auf. Die Haltevorrichtung (120) weist einen Betätigungsmechanismus auf, wobei mittels des Betätigungsmechanismus das oder die unteren Haltemittel (140) aus einer Ruhestellung in eine Haltestellung unter Ausbildung eines Kraftschlusses (142) und/oder Formschlusses zwischen den unteren Haltemitteln (140) und der Sattelplatte (310) expandiert werden können.

## Beschreibung

Die Erfindung betrifft eine Haubenvorrichtung für eine Sattelkupplung, insbesondere eine Haubenvorrichtung als Witterungsschutz für eine Sattelkupplung, wobei die Sattelkupplung eine Sattelplatte mit einer Aufnahme für einen Königszapfen eines Aufliegers umfasst und wobei die Haubenvorrichtung aufweist
- eine Haube mit einer im Wesentlichen geschlossenen Platte zum oberseitigen Abdecken der Sattelplatte und vorzugsweise mit einer Umrandung zum Umgeben der Sattelplatte,
- eine Haltevorrichtung zum Koppeln der Haube mit der Aufnahme, wobei die Haltevorrichtung wiederrum ein oder mehrere obere Haltemittel zum Halten oder Hintergreifen der Haube, ein oder mehrere untere Haltemittel zum Halten oder Hintergreifen der Sattelplatte und ein oder mehrere Verbindungsmittel zum Verbinden der oberen Haltemittel mit den unteren Haltemitteln und zum Bereitstellen und/oder Überbrücken eines Abstands zwischen der Haubenplatte und der Sattelplatte aufweist.

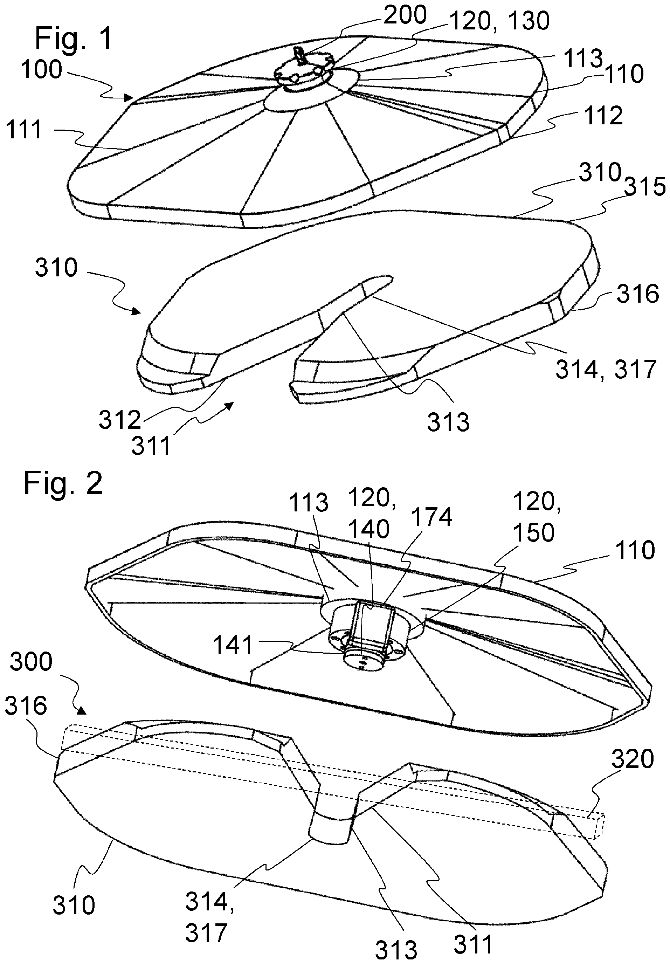

Ein Sattelzug ist ein Gespann aus einer Sattelzugmaschine (auch Sattelschlepper genannt) und einem Sattelauflieger (auch Sattelanhänger genannt). Die Sattelzugmaschine ist ein vom Lastkraftwagen abgeleitetes Fahrzeug, das anstelle einer Ladefläche eine Sattelkupplung (vgl. Fig. 1) aufweist. Zum Koppeln des Sattelaufliegers mit der Sattelzugmaschine liegt ein vorderer Bereich des Sattelaufliegers, auch Zunge genannt, auf der Sattelkupplung des Sattelzugs auf. Diese Sattelkupplung 300 (siehe bspw. Figur 2) besteht aus einer auch als "fünftes Rad" bezeichneten Sattelplatte 310 zur Auflage für den Sattelauflieger, wobei in der Sattelplatte 310 ein Ausschnitt 311 angeordnet ist. In einer durch den Ausschnitt 311 über eine V-Öffnung 312 und einen Hals 313 zugängliche Aufnahme 314 der Sattelplatte 310 kann ein als Königszapfen bezeichneter Bolzen an der Unterseite der Zunge des Sattelaufliegers eingreifen. Die Aufnahme 314 ist von einer Aufnahmewandung 317 begrenzt, wobei die Aufnahmeinnenwandung 317 insbesondere senkrecht zur Sattelplattenoberfläche 315 ausgerichtet ist. Ein in der Sattelkupplung 300 unterhalb der Sattelplatte 310 eingebauter Schließmechanismus 320 (gestrichelt angedeutet) koppelt mit dem Königszapfen, insbesondere in einer umlaufenden Nut des Königszapfens. Die Hinterachse der Sattelzugmaschine ersetzt im eingekoppelten Zustand die Vorderachse des Sattelaufliegers. Die Sattelkupplung 300 muss permanent mit Schmierfett geschmiert werden, wofür in der Regel automatische Dosiersysteme verwendet werden.

Wenn kein Sattelauflieger angekoppelt ist, kann bei winterlichen Straßenverhältnissen Schnee und Eis in den Ausschnitt der Sattelplatte gelangen. Vor dem Ankoppeln eines Sattelauflieger muss die Sattelkupplung dann erst manuell von Schnee und Eis befreit werden. Dies erfordert nicht nur unnötigen zeitlichen Aufwand, sondern hat weitere Nachteile. Zum einen gelangt beim Reinigen der Sattelkupplung Schmierfett in die Umwelt. Zum anderen fördert das Vereisen der Sattelkupplung deren Verschleiß, was die Sicherheit der Kopplung von Sattelzugmaschine und Sattelauflieger beeinträchtigen kann. Im ausgekoppelten Zustand sind Abdeckungen der Sattelplatte bzw. der Sattelkupplung als Witterungsschutz, aber auch als Diebstahlsicherung bekannt. Ebenfalls sind Abdeckungen für den Königszapfen, bspw. aus der US 2006 / 0096876 A1, bekannt.

Zum Schutz der Sattelkupplung der Zugmaschine im ausgekoppelten Zustand ist bspw. aus der US 2013 / 0175787 A1 eine Abdeckung bekannt, die zwischen Untergrund und Sattelkupplung angeordnet ist, um das Eindringen von Verunreinigungen in die Sattelkupplung von unten zu verhindern. Die Abdeckung weist eine umlaufende Umrandung auf, in der Befestigungsmittel zum Befestigen mit der Zugmaschine vorgesehen sind. Die Montage der Befestigungsschrauben an der Unterseite der Zugmaschine ist zeitaufwendig und umständlich.

Die CA 2418631 A1 betrifft ebenfalls eine Abdeckung zum oberseitigen Abdecken der Sattelkupplung. Die Abdeckung weist Abstandhalter auf, um zu verhindern, dass die Abdeckung bei Gebrauch unnötig mit Schmierfett verunreinigt wird. Befestigt wird die Abdeckung seitlich mit Haken oder Bändern. Ebenfalls bekannt sind bspw. aus der US 2008 / 0106066 A1 Hauben aus elastischem Material, welche Sattelkupplungen allgemein als elastischer Überzug schützen.

Weiter sind Haubenvorrichtungen bekannt, die zur Befestigung der Sattelkupplung eine Haltevorrichtung aufweisen, sodass die Haube oder Abdeckung mit der für den Königszapfen eines Aufliegers bestimmten Aufnahme koppeln kann. Bspw. ist in der US 5536031 A eine Abdeckung mit einem länglichen Verbindungsvorsprung offenbart, der die Geometrie des Königszapfens imitiert. Dabei ist an dem der Abdeckung beabstandeten Ende des Verbindungsvorsprungs eine Scheibe als Verbreiterung befestigt, welche die Platte der Sattelkupplung als unteres Haltemittel von unten hintergreift. Durch die starre Verbreiterung kann die Abdeckung nur montiert werden, indem der Verbindungsvorsprung durch den Ausschnitt der Sattelplatte in die Aufnahme geführt wird. Die Abdeckung wird quasi formschlüssig auf die Sattelkupplung aufgesteckt.

Die FR 2936770 A1 betrifft eine auch mit Diebstahlsicherung einsetzbare Schutzvorrichtung mit einer Haube. Die Haube ist an ihrer Unterseite mit einem Verbindungszapfen verbunden, wobei der Verbindungszapfen die Aufnahme der Sattelkupplung durchsetzt. Als unteres Haltemittel dient eine untere Haube, sodass zwischen den Hauben die Sattelkupplung anordenbar ist. Der Verbindungszapfen ist mit der unteren Haube verriegelbar. Auch diese Haubenvorrichtung hat allerdings den Nachteil, dass zur Montage der unteren Haube die Sattelplatte auch von der Unterseite zugänglich sein muss. Die Montage bzw. die Demontage ist zum einen aufwendig und zum anderen macht sich der Benutzer schmutzig, weshalb er die Haube ungerne montiert.

Es ist die Aufgabe der vorliegenden Erfindung, die Nachteile aus dem Stand der Technik zu eliminieren und eine bequem bedienbare und praktikable Haube als Abdeckung für die Sattelkupplung bei deren Nichtbenutzung bereitzustellen.

Die Aufgabe wird gelöst durch eine Haubenvorrichtung gemäß Anspruch 1. Vorteilhafte Ausführungsformen sind in den Unteransprüchen beansprucht und werden nachfolgend näher erläutert

Eine erfindungsgemäße Haubenvorrichtung der eingangs näher beschriebenen Art kennzeichnet sich dadurch, dass die Haltevorrichtung einen Betätigungsmechanismus aufweist, wobei mittels des Betätigungsmechanismus das oder die unteren Haltemittel aus einer Ruhestellung oder Aufbewahrungsstellung in eine Haltestellung oder Expansionsstellung unter Ausbildung eines Kraftschlusses und/oder Formschlusses zwischen den unteren Haltemitteln und der Sattelplatte expandiert, aufgeweitet, ausgelenkt, gedehnt oder gespreizt werden können.

Die erfindungsgemäße Haubenvorrichtung verbessert die Umweltfreundlichkeit und die Sicherheit der Sattelkupplung, weil sie eine einfach zu bedienende Haube zur Abdeckung der Sattelkupplung bereitstellt. Es wird durch die Abdeckung damit effektiv verhindert, dass die Sattelkupplung mit Schnee und Eis zugesetzt wird und beim Reinigen der Sattelkupplung mit Schmieröl verunreinigter Schnee bzw. verunreinigtes Eis in die Umwelt gelangt.

Durch den Betätigungsmechanismus kann die Haube mit der Sattelplatte gekoppelt werden, ohne dass die Sattelplatte von unten zugänglich sein muss. Die Haltevorrichtung wird mit einem unteren Haltemittel in Ruhestellung in die für den Königszapfen bestimmte Aufnahme bzw. den Ausschnitt der Sattelplatte eingesetzt. Ein Ausrichten der unteren Haltemittel beim Einsetzen in die Aufnahme ist in Ruhestellung nicht notwendig. Sobald die Haube in die Sattelplatte eingesetzt ist, wird der Betätigungsmechanismus bedient und das untere Haltemittel expandiert in einer radialen Richtung. Vorzugsweise wird das Halten der Haltevorrichtung dadurch realisiert, dass die unteren Haltemittel gegen eine senkrecht ausgerichtete Innenwandung der Aufnahme eine Druckkraft ausüben. Dadurch kann sich ein Reibschluss ausbilden. Durch den Reibschluss oder Kraftschluss zwischen der unteren Haltevorrichtung und der Sattelplatte wird ein ungewolltes Lösen der Haubenvorrichtung von der Sattelplatte verhindert. Der Reibschluss ist ausreichend, um bspw. ein unbeabsichtigtes Lösen der Haubenvorrichtung während der Fahrt der Zugmaschine zu verhindern. Ebenso ist es nicht möglich, die Haubenvorrichtung zerstörungsfrei von der Sattelplatte zu trennen. Damit ist eine ausreichende Diebstahlsicherung gewährleistet. Alternativ wäre eine Ausführungsform denkbar, bei der die Haltevorrichtung die Aufnahme der Sattelplatte vollständig durchsetzt und durch Expansion der unteren Haltemittel die Sattelplatte von unten hintergriffen wird, wobei der Durchmesser der unteren Haltemittel den Durchmesser der Aufnahme der Sattelplatte für den Königszapfen übersteigt. Dadurch kann die Haubenvorrichtung auch formschlüssig in der Sattelplatte gehalten werden.

Das oder die durch einen Betätigungsmechanismus expandierbare untere Haltemittel kann/können eine schnelle und einfache Montage mit einer Hand ermöglichen. Der Betätigungsmechanismus zum Durchführen der Expansionsbewegung im Bereich der unteren Haltemittel kann grundsätzlich mechanisch, elektrisch, pneumatisch und/oder hydraulisch gebildet sein. In einer pneumatisch betätigten Ausführungsform kann das untere Haltemittel ein Schlauch sein, der zum Expandieren in die Haltestellung mit Luft oder einem sonstigen Gas gefüllt und dadurch aufgeweitet wird. Für das Zurückführen in die Ruhestellung wird die Luft oder das sonstige Gas aus dem Halteschlauch abgelassen. Weitere Ausführungsformen für die unteren Haltemittel werden im weiteren Verlauf der Anmeldung beschrieben.

Damit die geschlossene Haubenplatte im gekoppelten Zustand nicht unnötig mit Schmierfett verunreinigt wird, ist ein Abstand zwischen der Haubenplatte und der Sattelplatte vorgesehen. Der Abstand wird vorzugsweise durch die Haltevorrichtung, insbesondere durch Verbindungsmittel oder Abstandsmittel der Haltevorrichtung bereitgestellt. Vorzugsweise weist die Haltevorrichtung eine Standfläche auf, die auf der Sattelplattenoberfläche aufsteht. Alternativ könnte der Abstand durch separate Abstandhalter oder durch wenigstens einen Teil der Umrandung bereitgestellt werden. Die Umrandung und/oder separate Abstandhalter, bspw. stiftförmige Vorsprünge oder längliche Rippen, sind einstückig mit der geschlossenen Platte hergestellt. Die Umrandung kann zusätzlich ganz oder teilweise die Umrandung der Sattelplatte begrenzen. Durch den Abstand zwischen Platte und Sattelplatte wird zusätzlich ein Saugnapfeffekt vermieden, der ein unerwünschtes Anhaften der Haubenplatte an der Sattelplatte hervorruft.

Es sei darauf hingewiesen, dass die Haube mit Teilen der Haltevorrichtung einstückig ausgebildet sein kann. Ebenso können bspw. Teile der oberen Haltemittel mit Teilen der Verbindungsmittel und/oder mit Teilen der unteren Haltemittel einstückig ausgebildet sein. Der Betätigungsmechanismus kann mit Bauteilen der oberen Haltemittel, der Verbindungsmittel und/oder der unteren Haltemittel gebildet werden. So kann im Bereich der oberen Haltemittel eine Bedienbewegung durch den Benutzer erzeugt werden. Diese Bedienbewegung wird durch oder mittels der Verbindungsmittel zu den unteren Haltemittel übertragen. In dem Bereich der unteren Haltemittel resultiert durch die Bedienbewegung eine Expandierbewegung oder Expansionsbewegung. Im Rahmen dieser Expansionsbewegung bewegen sich Bauteile der unteren Haltemittel in radialer Richtung nach außen und halten oder hintergreifen an der Sattelplatte.

In einer bevorzugten Ausführungsform der Erfindung ist der Betätigungsmechanismus durch einen Handgriff betätigbar, der den oberen Haltemitteln der Haltevorrichtung zugeordnet ist.

Die Haubenvorrichtung ist dadurch mit einer Hand montierbar. Der Handgriff kann die Bedienbewegung durch eine Rotation des Handgriffs um die Zentralachse der Haltevorrichtung bewirken.

Zwecks Diebstahlssicherung und zur Verbesserung der Betriebssicherheit umfasst die Haltevorrichtung einen Verriegelungsmechanismus, wobei in einem entriegelten Zustand der Betätigungsmechanismus betätigbar ist und in einem verriegelten Zustand der Betätigungsmechanismus nicht betätigbar ist.

Die Haltevorrichtung kann einen insbesondere im Bereich der oberen Haltemittel angeordneten Schließzylinder umfassen. Der Schließzylinder ist für einen Schlüssel zugänglich. Der Zugang des Schlüssels zum Schließzylinder kann bspw. durch einen Ausschnitt eines als Kappe ausgebildeten Handgriffs realisiert sein. Der Schlüssel kann gemeinsam mit dem Zündschlüssel aufbewahrt werden und ist dadurch besonders anwenderfreundlich verfügbar. Die Haube wird im verriegelten Zustand vorzugsweise ausschließlich durch Reibschluss gegen ein vertikales Herausziehen geschützt. Ohne Schlüssel lässt sich der Kraftschluss zwischen Haubenvorrichtung und Sattelplatte nicht lösen, sodass die Haubenvorrichtung nicht zerstörungsfrei entfernt werden kann. Damit ist die Haubenvorrichtung effektiv gegen Diebstahl geschützt.

In einer optionalen Weiterbildung der Erfindung umfasst der Betätigungsmechanismus ein Rückstellmittel, wobei das Rückstellmittel das oder die unteren Haltemittel aus der Haltestellung in die Ruhestellung bewegen kann.

Die Rückstellmittel bewegen die unteren Haltemittel in die der Expansionsbewegung entgegengesetzten Richtung. Die Rückstellmittel sind bspw. als elastische Gummiringe ausgebildet, die in Haltestellung der unteren Haltemittel unter Spannung stehen, während der Betätigungsmechanismus die unteren Haltemittel radial nach außen drückt. Wird der Druck in radialer Richtung durch den Betätigungsmechanismus beendet, so drücken die Rückstellmittel die unteren Haltemittel in radialer Richtung entgegen der Expansionsbewegung nach innen zurück in die Ruhestellung. Die Rückstellmittel stellen zusätzlich sicher, dass sich die Haubenvorrichtung zuverlässig wieder von der Sattelplatte trennen lässt.

Intuitiv bedienbar wird die Haubenvorrichtung, wenn durch den oder einen Handgriff eine Rotationsbewegung im Betätigungsmechanismus bereitgestellt werden kann, wobei durch die Rotationsbewegung das oder die unteren Haltemittel aus einer Ruhestellung in die Haltestellung expandiert werden können.

Der Benutzer bedient den Handgriff und erzeugt eine Rotationsbewegung als Bedienbewegung im Bereich der oberen Haltemittel. Die Rotationsbewegung wird durch entsprechende Mittel der oder im Bereich der Verbindungsmittel zu dem Bereich der unteren Haltemittel übertragen. Insbesondere rotieren Handgriff und Elemente des Bedienmechanismus der oder im Bereich der unteren Haltemittelsynchron bzw. gemeinsam mit dem Handgriff um 90°. Dort wird die Rotationsbewegung in eine radial nach außen gerichtete Expansionsbewegung übersetzt. Solche Übersetzungsmittel können bspw. ein Nocken, Riegel oder Bolzen sein.

In einer bevorzugten Ausführungsform der Erfindung ist in einem entriegelten Zustand des Verriegelungsmechanismus der Handgriff eine Rotation übertragend mit dem Verbindungsstift verbunden und in einem verriegelten Zustand rotiert der Handgriff relativ zu dem Verbindungsstift frei.

In einem verriegelten Zustand kann der Handgriff rotiert werden, ohne dass dabei die Rotationsbewegung auf einen Adapter übertragen werden kann. Ein fest mit dem Handgriff verbundener Schließzylinder weist im verriegelten Zustand eine glatte Manteloberfläche auf. Beim Entriegeln treten im Bereich der unteren Stirnwandung des Schließzylinders zwei Stellelemente radial hervor, die einen Eingriff mit einer Komplementärstruktur im Adapter bilden. Es sind jedoch viele weitere Schlüssel-Schlosssysteme denkbar, vergleichbar mit Schlüssel-Schlosssystemen für Tankdeckel. Im entriegelten Zustand rotieren Handgriff, Adapter, Schließzylinder, Achsstift und Nocken/Riegel/Grundplatte synchron bzw. gemeinsam um 90°. Im verriegelten Zustand existiert kein Eingriff zwischen Schließzylinder und Adapter, sodass der Handgriff frei rotiert.

Platzsparend realisiert werden kann der Betätigungsmechanismus, wenn die Rotationsbewegung durch einen Verbindungsachsstift übertragbar ist, wobei der Verbindungsachsstift vollständig oder in einem Teilabschnitt einen nicht-runden Querschnitt aufweist.

Der Verbindungsstift zum Übertragen der Bedienbewegung bzw. Rotationsbewegung ist bspw. ein vierkantiger Achsstift. Ein mit dem Handgriff rotationsübertragendes oberes Lager überträgt die Rotationsbewegung von dem Handgriff auf den Achsstift. Das obere Lager kann im Adapter ausgebildet sein. Ein rotationsübertragendes unteres Lager überträgt die Rotationsbewegung von dem Achsstift bspw. auf einen Nocken, einen Riegel oder eine Grundplatte.

Insbesondere umfassen die unteren Haltemittel längliche Spreizbacken oder Kontaktplatten, wobei die Spreizbacken oder Kontaktplatten eine zweckmäßig ausgebildete Kontaktfläche aufweisen und zum Bereitstellen des Kraftschlusses in einer radialen Richtung gespreizt, ausgelenkt oder auf sonstige Weise bewegt werden können.

Insbesondere umfassen die unteren Haltemittel Stellmittel, um die durch die Rotationsbewegung hervorgerufene Rotationsbewegung im Bereich der unteren Haltemittel in eine Bewegung in radialer Richtung zu übersetzen und dadurch eine Expansion in radialer Richtung zu bewirken. Es kommen verschiedene Betätigungsmechanismen und Haltemechanismen infrage, die sich bspw. aus bekannten Befestigungsmitteln für Tankdeckelstutzen ableiten lassen. Vergleichbar mit dem Prinzip von Trommelbremsen können im Rahmen der Expansionsbewegung Spreizbacken durch ein rotierendes Übersetzungsmittel gespreizt oder ausgelenkt werden. Das rotierende Übersetzungsmittel kann ein rotierender Spreiznocken sein. Alternativ sind rotierende Riegel oder axial ausgerichtete mit der Grundplatte verbundene Spreizbolzen möglich. Alternativ zur Bereitstellung des Kraftschlusses kann zum Hintergreifen der Sattelplatte die Auslenkung oder Spreizung auch zwecks Ausbildung des Formschlusses erfolgen.

Die Verfügbarkeit der Haubenvorrichtung wird verbessert, wenn die Haubenvorrichtung ein Ordnungssystem umfasst und die Haltevorrichtung und/oder die Haube mit dem Ordnungssystem koppelbar ist, wenn die unteren Haltemittel in einer Ruhestellung sind.

Wenn also das Haltemittel nicht mit der Sattelplatte gekoppelt ist, können Haube und Haltemittel mit einem Ordnungssystem gekoppelt werden. Das Ordnungssystem selbst wiederum ist an der Rückseite der Rückwand der Fahrerkabine dauerhaft montierbar. Bei Nichtgebrauch der Haubenvorrichtung, also wenn bspw. ein Auflieger montiert ist, bleibt die Haubenvorrichtung trotzdem stets verfügbar, was die Anwenderfreundlichkeit steigert.

Weiter verbessert wird das Ordnungssystem, wenn die Haltevorrichtung eine Halterippe zur Kopplung mit dem Ordnungssystem in einer Ruhestellung der unteren Haltemittel aufweist.

Die Verbindung zwischen Haltevorrichtung und Ordnungssystem ist damit quasi mit einer oder mehreren Steckverbindungen formschlüssig realisiert.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels {bzw. -beispiele} der Erfindung und den Zeichnungen. Diese zeigen in
- Fig. 1, 2: eine Explosionsdarstellung aus Sattelkupplung (Stand der Technik) und einer beispielhaften erfindungsgemäßen Haubenvorrichtung in perspektivischer Darstellung,
- Fig. 3: eine perspektivische Darstellung aus Sattelplatte und einer beispielhaften erfindungsgemäßen Haubenvorrichtung,
- Fig. 4: eine Schnittansicht aus Sattelplatte und einer beispielhaften erfindungsgemäßen Haubenvorrichtung,
- Fig. 5: eine beispielhaftes Ordnungssystem einer erfindungsgemäßen Haubenvorrichtung
- Fig. 6: eine beispielhafte erfindungsgemäße Haubenvorrichtung in perspektivischer Darstellung mit Ordnungssystem,
- Fig.7: eine beispielhafte Baugruppe einer Haltevorrichtung mit oberen Haltemitteln für eine erfindungsgemäße Haubenvorrichtung,
- Fig.8: einen beispielhaften Adapter einer erfindungsgemäßen Haltevorrichtung,
- Fig.9: eine beispielhafte Baugruppe einer Haltevorrichtung mit unteren Haltemitteln,
- Fig.10: eine Explosionsdarstellung einer Haltevorrichtung in einer ersten Ausführungsform mit Nocken,
- Fig.11: eine Explosionsdarstellung eines Betätigungsmechanismus in einer ersten Ausführungsform mit Nocken,
- Fig.12: eine Explosionsdarstellung einer Haltevorrichtung in einer zweiten Ausführungsform mit Spreizbolzen,
- Fig.13: eine Explosionsdarstellung eines Betätigungsmechanismus in einer zweiten Ausführungsform mit Spreizbolzen,
- Fig.14: eine Explosionsdarstellung einer Haltevorrichtung in einer dritten Ausführungsform mit Spreizriegel und
- Fig.15: eine Explosionsdarstellung eines Betätigungsmechanismus in einer dritten Ausführungsform mit Spreizriegel.

Die Figuren sind lediglich beispielhafter Natur und dienen nur dem Verständnis der Erfindung. Die gleichen Elemente sind mit denselben Bezugszeichen versehen.

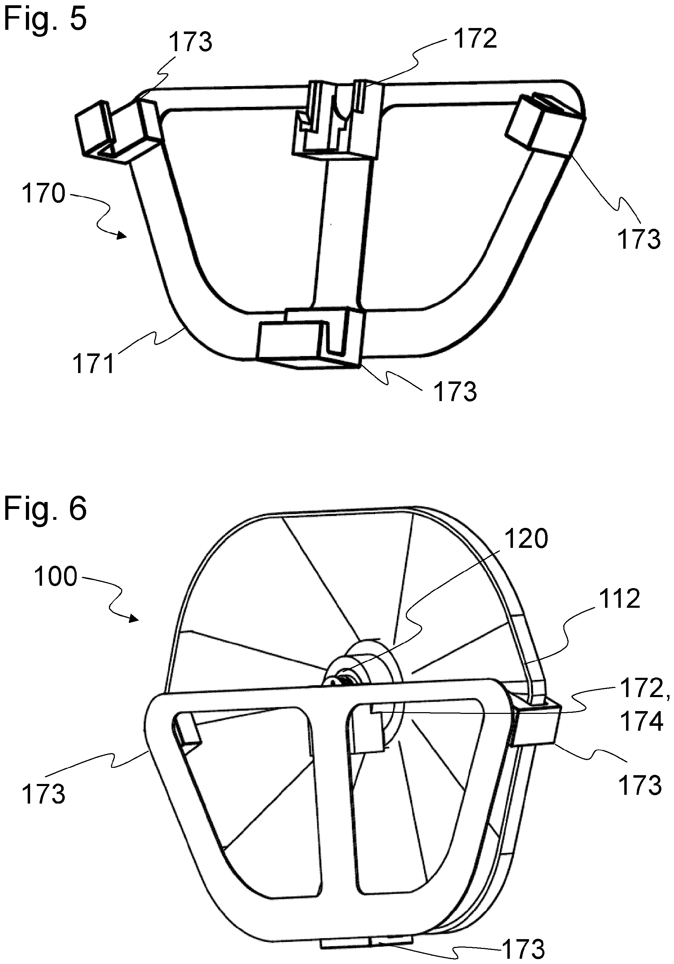

Die Figuren 1 und 2 zeigen eine Anordnung aus Haubenvorrichtung 100 und Sattelkupplung 300 in einer Explosionsdarstellung aus unterschiedlichen Perspektiven. Die Haubenvorrichtung 100 weist eine Haube 110 zum vollständigen Abdecken oder Bedecken der Sattelplatte 310 der Sattelkupplung 300 auf. Die Haubenvorrichtung 100 weist ferner eine Haltevorrichtung 120 auf, um die Haube 110 in dem Bereich der für den Königszapfen vorgesehenen Aufnahme 314 mit der Sattelplatte 310 zu koppeln. Durch einen Schlüssel 200 ist ein (verdeckter) Verriegelungsmechanismus betätigbar. Die Haube 110 soll zweckmäßig die Sattelplattenoberfläche 315 der Sattelplatte 310 bedecken und weist daher eine Haubenplatte 111 auf, deren Fläche mindestens der Sattelplattenoberfläche 315 des Sattelplatte 310 entspricht. Ferner weist die Haube 110 eine um die Haubenplatte 111 umlaufende Umrandung 112 auf. Diese Umrandung 112 kann ausgebildet sein, um auf der Sattelplattenoberfläche 315 des Sattelplatte 310 aufzustehen und/oder die Mantelfläche 316 der Sattelplatte 310 zu umgeben. Zur Durchführung der Haltevorrichtung 120 weist die Haubenplatte 111 der Haube 110 eine Öffnung mit einer Aussteifung 113 auf. Optional können (nicht dargestellte) Standfüße oder Vorsprünge zwischen der Haubenplatte 111 und der Sattelplattenoberfläche 315 angeordnet werden. Entsprechende Standfüße können auch aus magnetischem Material ausgebildet sein. Um die Verunreinigung der Haubenvorrichtung 100 zu verringern, ist die Kontaktfläche zur Sattelplatte 310 insbesondere minimiert. Die unteren Haltemittel 140 und insbesondere Teile der Verbindungsmittel 150 sind idealerweise formschlüssig oder mit wenig Spiel in die Aufnahme 314 der Sattelplatte 310 einsetzbar. Ferner ist den Verbindungsmitteln 150 eine Rippe 174 oder sonstiges Haltemittel zugeordnet, um die Haltevorrichtung 120 und damit die Haube 110 mit einem Ordnungssystem 170 (vgl. Figur 5) zu koppeln. Diese Rippe 174 ist im mit der Sattelplatte 310 gekoppelten Zustand im Bereich des Halses 313 des Ausschnitts 311 angeordnet.

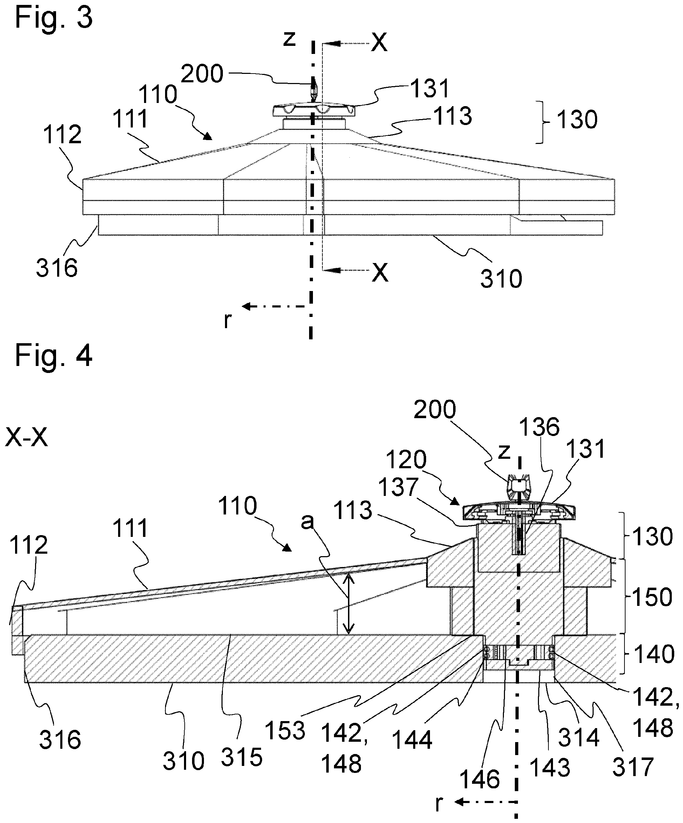

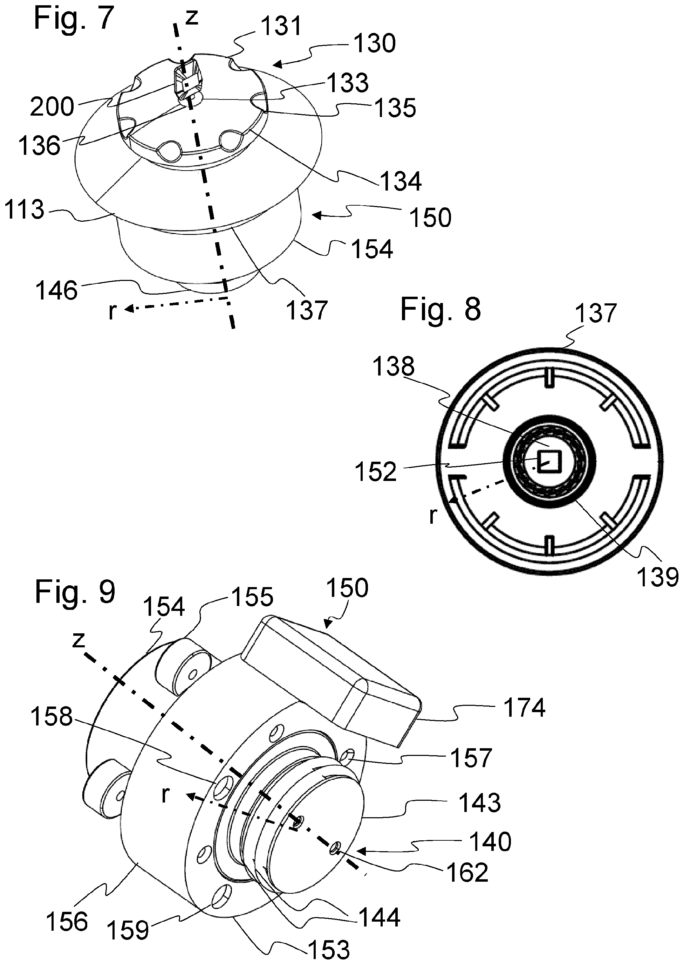

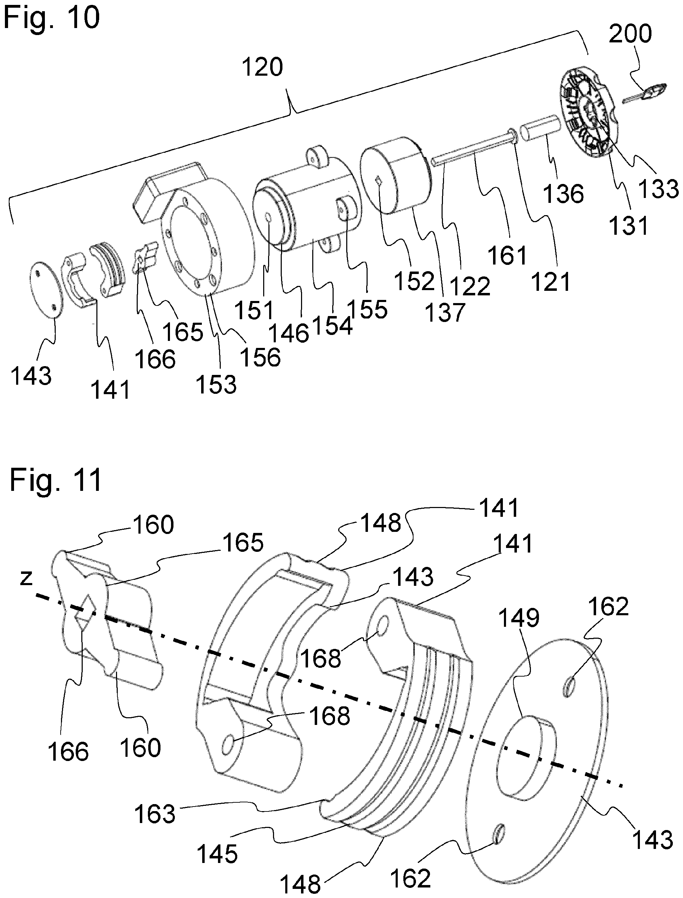

Die Figuren 3 und 4 zeigen eine beispielhafte erfindungsgemäße Haubenvorrichtung 100, welche mit der Sattelplatte 310 montiert ist. Die Umrandung 112 der Haubenplatte 111 ist im montierten Zustand im Bereich der Mantelfläche 316 der Sattelplatte 310 angeordnet. Möglich ist sowohl die Ausbildung eines Kontakts zwischen Umrandung 112 und der Mantelfläche 316 als auch die Anordnung von Umrandung 112 und Mantelfläche 316 mit wenig Spiel. Dadurch schützt die Umrandung 112 die Sattelkupplung 300 gegen seitlich eindringende Verunreinigungen. Außerdem wirkt die Umrandung 112 der Haubenvorrichtung 110 als Diebstahlssicherung, weil auch ein horizontales Verrutschen der Haube 110 unmöglich ist, ohne die Haube 110 vertikal anzuheben. Grundsätzlich kann die Haltevorrichtung 120 funktional in obere Haltemittel 130, untere Haltemittel 140 und zwischen den oberen Haltemitteln 130 und unteren Haltemitteln 140 angeordnete Verbindungsmittel 150 unterteilt werden. Als obere Haltemittel 130 können Bauteile oder Bauteilabschnitte oberhalb der Haube 110 oder im Bereich einer Ausnehmung oder Aussteifung 113 in der Haubenplatte 111 bezeichnet werden. Als untere Haltemittel 140 können Bauteile oder Bauteilabschnitte unterhalb der Sattelplattenoberfläche 315 bzw. in und unterhalb der Aufnahme 314 bezeichnet werden. Verbindungsmittel 150 überbrücken den je nach Position ggf. veränderlichen Abstand a zwischen der Haube 110 und der Sattelplatte 310 und können ein Schutzgehäuse oder einen Rahmen für den Betätigungsmechanismus ausbilden. Ferner befestigen sie die Haltevorrichtung 120 mit der Haube 110. Die Aussteifung 113 mit der Ausnehmung zum Durchführen der Haltevorrichtung 120 kann einstückig mit der Haube 110 oder Einstückig mit der Haltevorrichtung 120 oder als separates Bauteil ausgebildet sein. Die Verbindungsmittel 150, insbesondere der obere Verbindungskörper 154 und/oder der untere Verbindungskörper 156 (vgl. Figur 10), bilden eine Standfläche 153, welche auf der Sattelplattenoberfläche 315 aufsteht. Ein Zentrierabsatz 146, insbesondere ausgebildet als zentrierter Vorsprung des oberen Verbindungskörpers 156 wird formschlüssig in die Aufnahme 314 der Sattelplatte 310 eingesetzt oder weist ein geringes Spiel in radialer Richtung r gegenüber der Aufnahmeinnenwandungen 317 der Aufnahme 314 auf. Figur 4 zeigt die unteren Haltemittel 140 in einer expandierten Stellung, sodass ein Kraftschluss 142 zwischen den Kontaktflächen 148 der unteren Haltemittel 140, bspw. der Spreizbacken 141 (vgl. Figur 11) und der Aufnahmeinnenwandungen 317 der Aufnahme ausgebildet werden kann. Durch den Schlüssel 200 kann die Verbindung zwischen Handgriff 131 und Adapter 137 entriegelt werden, sodass der Handgriff 131 um die Zentralachse z rotiert werden kann. Die Rotation des Handgriffs 131 wird durch den Betätigungsmechanismus (verdeckt) übertragen, sodass die Kontaktflächen 148 entlang der radialen Richtung r senkrecht zur Zentralachse z in die Ruhestellung oder Aufbewahrungsstellung bewegt werden. Der Kraftschluss 142 löst sich. Unterstützend wirken können hierbei bei diesem Vorgang Rückstellmittel 144 (vgl. Figur 9).

Ein Ordnungssystem 170 der Haubenvorrichtung 100 zum Aufbewahren der Haubenvorrichtung 100 ist in Figur 5 dargestellt, während Figur 6 eine Haubenvorrichtung 100, einschließlich Ordnungssystem 170, zeigt. Das Ordnungssystem 170 umfasst einen flächigen Rahmen 171, der an die äußere Rückwand der Fahrerkabine einer Zugmaschine (nicht dargestellt) montiert werden kann. Dadurch kann die Haubenvorrichtung 100 zwischen Fahrerkabine und der vorderen Wandung des Aufliegers bei Nichtgebrauch aufbewahrt werden. Im Aufbewahrungszustand koppelt die Rippe 174 (in Figur 6 verdeckt) der Haltevorrichtung 120 mit der Schiene 172 des Ordnungssystems 170. Entlang des Rahmens 171 angeordnete Haken 173 sind so ausgebildet, dass die Umrandung 112 formschlüssig in die Haken 173 eingelegt, insbesondere eingerastet oder eingeklippst, werden kann. Haube 110 und Haltevorrichtung 120 werden auch durch die Schwerkraft in dem Ordnungssystem 170 der Haubenvorrichtung 100 gehalten.

Die Figuren 7-9 zeigen einzelne Baugruppen der Haltevorrichtung 120. Figur 7 zeigt eine Baugruppe mit Bauteilen, welche insbesondere die oberen Haltemittel 130 und die Verbindungsmittel 150 bereitstellen. Die Haltevorrichtung 120 ist durch einen Benutzer mittels eines Handgriffs 131 von einer Haltestellung in die Ruhestellung überführbar und umgekehrt. Der Handgriff 131 umfasst eine Kappe 134 mit Griffmulden 135 an der Oberseite der Kappe 134. Der Unterseite der Kappe 134 (verdeckt, siehe Figur 10) sind Rastmittel zum Einrasten mit einem Adapter 137 zuordenbar, wobei durch die Einrastung eine Rotationsbewegung zwischen Handgriff 131 und Adapter 137 übertragen werden kann. Mittig im Bereich der Zentralachse z ist in dem Handgriff 131 ein Durchgang 133 für einen Schlüssel 200 vorgesehen, um die Haubenvorrichtung 100 zu verriegeln bzw. zu entriegeln. Über den Durchgang 133 ist für den Schlüssel 200 ein Schließzylinder 136 zugänglich. Der Ausschnitt der Haube 110 für die Haltevorrichtung 120 (vgl. Figur 1) kann durch eine Auskragung vollständig abgedeckt werden, die gleichzeitig als Aussteifung 113 der Haube 110 verwendet wird.

Figur 8 zeigt einen Adapter 137, wobei die Rastmittel des Adapters 137 im entriegelten Zustand mit den Rastmitteln des Handgriffs bzw. Rastmitteln des Schließzylinders gekoppelt sind (vgl. Figur 10). Mittig weist der Adapter 137 eine Schlossaufnahme 139 auf, um den Schließzylinder 136 (vgl. Figur 8) formschlüssig aufzunehmen. Im Bereich der Schlossaufnahme 139 des Schließzylinders 136 ist an deren Bodenwandung 138 des Adapters 137 eine als oberes Achslager 152 ausgebildete Öffnung mit einem nicht runden Öffnungsquerschnitt vorgesehen. Durch das Achslager 152 kann ein komplementär ausgebildeter Achsschaft 122 des Verbindungsstifts 161 geführt werden, wobei der Achskopf 121 an der Bodenwandung 138 anliegt.

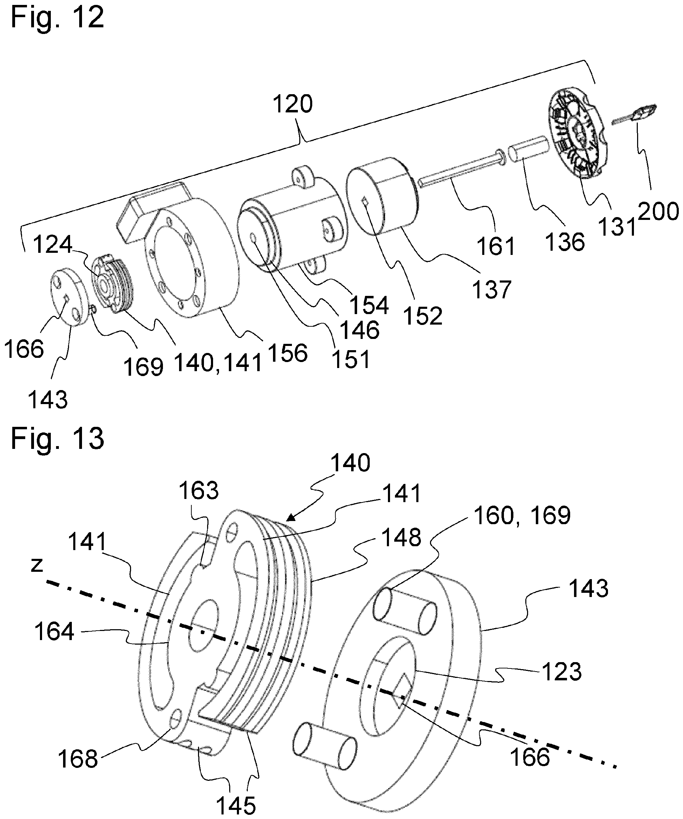

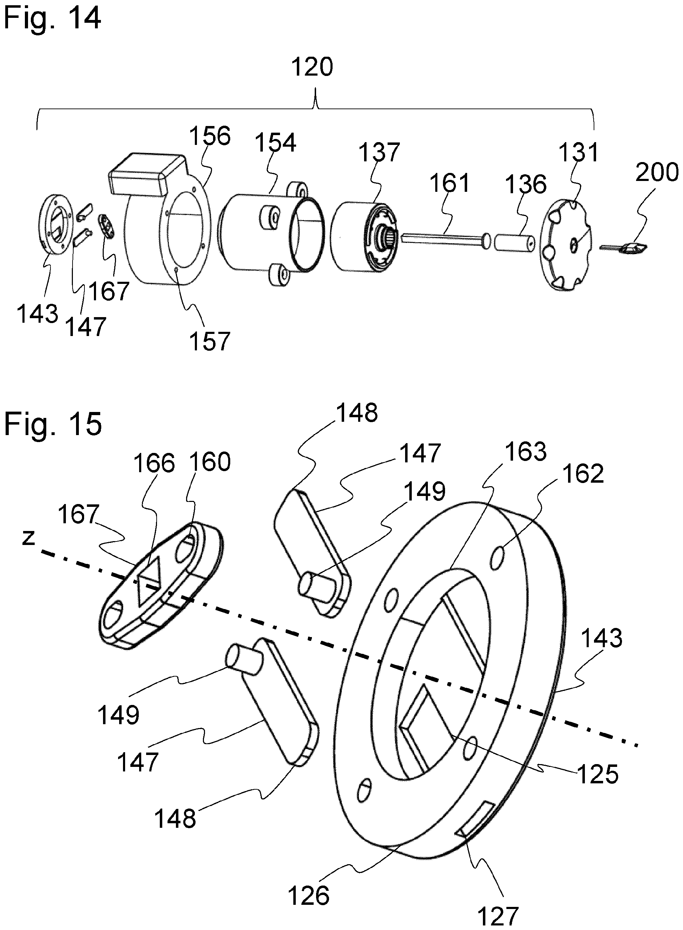

Figur 9 zeigt unter anderem Bauteile der unteren Haltemittel 140 zum Koppeln mit der Aufnahmeinnenwandung 317 der Aufnahme 314 der Sattelplatte 310. Ein oberer Verbindungskörper 154, der sowohl den oberen Haltemitteln 130 als auch den Verbindungsmitteln 150 zugeordnet werden kann, umfasst Verbindungslaschen 155, um bspw. mithilfe von Befestigungsschrauben (nicht dargestellt) den oberen Verbindungskörper 154 der Haltevorrichtung 120 mit der Haube 110, der Aussteifung 113 und/oder mit dem unteren Verbindungskörper 156 zu verschrauben. Ein unterer Verbindungskörper 156 entspricht bspw. in seiner axialen Länge z dem Abstand a zwischen Haube 110, insbesondere der Haubenplatte 111 und der Oberfläche 315 der Sattelplatte 310. Der untere Verbindungskörper 156 kann Löcher 157 für Befestigungsmittel zur Montage mit dem oberen Verbindungskörper 154, bspw. mit dessen Verbindungslaschen 155, aufweisen. Ebenfalls vorgesehen sind in dem unteren Verbindungskörper 156 Löcher zur Montage von Elementen der unteren Haltemittel 140, bspw. der Grundplatte 143, oder des Betätigungsmechanismus. Eine axiale Wandung oder Stirnwandung des unteren Verbindungskörpers 156 liegt als Standfläche 153 der Haltevorrichtung 120 beim Koppeln mit der Sattelplatte 310 auf der Sattelplattenoberfläche 315 auf. Da die Sattelplatte 310 in der Regel aus einem weichmagnetischen Material gebildet ist, sind zur Sicherung der Haltevorrichtung 120 gegen unbeabsichtigtes Verrutschen magnetische Haftmittel 159, insbesondere ein Dauermagnet, in einer entsprechenden Aufnahme in dem unteren Verbindungskörper 156 angeordnet. Die unteren Haltemittel 140 sind hier von Gummiringen umgeben, welche die Rückstellmittel 144 beim Zurückstellen der Haltemittel 140 von einer expandierten Haltestellung zurück in die Ruhestellung bewegen. Nach unten abgeschlossen wird die Haltevorrichtung 120 durch eine Grundplatte 143. Diese Grundplatte 143 kann je nach verwendetem Betätigungsmechanismus starr (vgl. bspw. Figuren 11, 15) oder zusammen mit dem Verbindungsstift 161 rotierend gelagert werden (vgl. Figur 13).

Figur 10 zeigt eine Explosionsdarstellung einer ersten Variante einer Haltevorrichtung 120. Mit einem Schlüssel 200 kann durch einen Durchgang 133 in dem Handgriff 131 ein Schließzylinder 136 entwickelt werden, sodass Rastmittel des Schließzylinders 136 (nicht dargestellt) mit Rastmitteln (verdeckt) des Adapters 137 zur Übertragung einer Rotation des Handgriffs 131 einrastend koppeln. Die Rotationsbewegung des Adapters 137 wird durch eine formschlüssige Kopplung zwischen einem Achsschaft 122 eines Verbindungsstifts 161 mit einem nicht runden Querschnitt und einem zu diesem Querschnitt komplementären oberen Achslager 152 des Adapters 137 erzeugt. Relativ zu dem unteren Verbindungskörper 156 kann der Verbindungsstift 161 bspw. in einem Durchgang 151 des oberen Verbindungskörpers 156 frei rotieren. Im Rahmen des abgebildeten Betätigungsmechanismus ist der Achsschaft 122 in einem komplementär ausgebildeten unteren Achslager 166 eines Spreiznockens 165 gelagert. Durch die Rotation des Achsschaftes 122 rotiert auch der Spreiznocken 165 und expandiert die Spreizbacken 141.

Figur 11 zeigt Bauteile bzw. Elemente eines ersten Betätigungsmechanismus. Ein Spreiznocken 165 kann gemeinsam mit dem Handgriff 131 rotieren. Um Spreizbacken 141 der unteren Haltemittel 140 aus der Ruhestellung oder Aufbewahrungsstellung in die Expansionsstellung (vgl. Figur 4) zu bewegen, rotiert der Spreiznocken 165 mit 90° um die Zentralachse z. Der Spreiznocken 165 ist länglich ausgebildet, wobei die Enden als Stellmittel 160 fungieren. Die Stellmittel 160 drücken während der Rotation des Spreiznockens 165 gegen Flanken der ebenfalls länglich ausgebildeten Spreizbacken 141. Die Spreizbacken 141 sind an der Grundplatte 143 befestigt und weist Lager 168 zu drehbaren Lagerung der Spreizbacken 141 auf. Die Lager 168 sind mit einem Abstand zur Zentralachse z angeordnet. Die (nicht dargestellten) Bolzen zum Verbinden der Grundplatte 143 mit dem oberen Verbindungskörper 154 oder dem unteren Verbindungskörper 156 durchsetzen die Lager 168. Die nicht dargestellten Bolzen verbinden die Montagelöcher 162 in der Grundplatte 143 bspw. mit Löchern 158 des unteren Verbindungskörpers 156. Durch den Abstand a zwischen den Lagern 168 und der Zentralachse Z wird die Rotationsbewegung des Spreiznocken 165 in eine radiale Expansionsbewegung der Kontaktflächen 148 der Spreizbacken 141 übersetzt. In anderen Worten, während der Rotation des Spreiznockens 165 gleiten die Stellmittel 160 des Spreiznockens 165 auf entsprechend ausgebildeten Flächen der Spreizbacken 141 ab. Weitere Flächen, bspw. die Stirnwandungen des Spreiznockens 165 können während der Rotation auf der Fläche eines Führungsstifts 149 der Grundplatte 143 abgleiten. Um die Rotationsbewegung des Spreiznockens 165 zweckmäßig auf 90° um die Zentralachse z zu begrenzen sind an dem Lager 168 gegenüberliegenden Enden der jeweiligen länglichen Spreizbacken 141 Stoppmittel 163 vorgesehen, an denen die Stellmittel 160 des Spreiznockens 165 anschlagen können. Die radial außen angeordneten Kontaktflächen der Spreizbacken 141 können Nuten 145 oder sonstige Vertiefungen zur Aufnahme der Rückstellmittel 144 (vgl. Figur 9), bspw. Gummiringe, aufweisen.

Die Figuren 12 und 13 zeigen Bauteile und Elemente einer weiteren Ausführungsform von Betätigungsmechanismus und unterem Haltemittel 140. Die Grundplatte 143 ist im Gegensatz zur Grundplatte 143 der Ausführungsform gemäß der Figuren 10 und 11 drehbar gelagert und kann gemeinsam mit dem Handgriff 131 rotieren. Die Spreizbacken 141 sind an Lagern 168 bspw. mit dem unteren Verbindungskörper 154 verbunden. Ferner sind die Spreizbacken 141 als Abschnitte eines gemeinsamen Backenkörpers 164 ausgebildet und von dem Achsstift 161 durchsetzt, sodass der Backenkörper 164 nicht zusammen mit dem Handgriff 131 rotiert. Der Backenkörper 164 ist aus einem elastisch reversiblen Material gefertigt. Um Spreizbacken 141 der unteren Haltemittel 140 aus der Ruhestellung oder Aufbewahrungsstellung in die Expansionsstellung oder Haltestellung (vgl. Figur 4) zu bewegen, rotiert die Grundplatte 143 um 90° um die Zentralachse z. Die Stellmittel 160 sind in dieser Ausführungsform als Spreizbolzen 169 ausgebildet, die parallel und mit Abstand zur Zentralachse z verlaufen und fest mit der Grundplatte 143 verbunden sind. Die Spreizbolzen 169 umlaufen bei Rotation der Grundplatte 143 die Zentralachse z. Die Stellmittel 160 drücken während der Rotation der Grundplatte 143 gegen Flanken der ebenfalls länglich ausgebildeten Spreizbacken 141. Dabei verformen sich die Spreizbacken 141 elastisch reversibel in radialer Richtung r. Weitere Flächen, bspw. eine Bodenwandung einer Vertiefung 123 der Grundplatte 142 kann während der Rotation auf der Fläche eines Vorsprungs 124 des Backenkörpers 164 abgleiten. Um die Rotationsbewegung der Grundplatte 143 zweckmäßig auf 90° um die Zentralachse z zu begrenzen, sind Stoppmittel 163 am Backenkörper 164 vorgesehen, an denen die Stellmittel 160 der Grundplatte 143 anschlagen können.

Die Figuren 14 und 15 zeigen Bauteile und Elemente einer dritten Ausführungsform von Betätigungsmechanismus und unterem Haltemittel 140. Die Grundplatte 143 weist hier vier Montagelöcher 162 auf und ist mit geeigneten Befestigungsmitteln (nicht dargestellt) ggf. mit den Löchern 158 des unteren Verbindungskörpers 156 verbunden. Die Kontaktflächen 148 sind hier an den Rändern von länglich ausgebildeten Kontaktplatten 147 angeordnet. An dem den Kontaktflächen 148 gegenüberliegenden Ende der Kontaktplatten 147 sind axial und parallel zur Zentralachse z ausgerichtete Führungsstifte 149 angeordnet. Die Führungsstifte 149 der beiden Kontaktplatten 147 sind in Langlöchern eines Riegels 167 angeordnet. Der Riegel 167 weist das untere Achslager 166 auf und rotiert vergleichbar mit dem Spreiznocken 165 (vgl. Figur 11). Die Langlöcher entsprechenden Stellmitteln 160 des Betätigungsmechanismus und bewirken durch die Kopplung mit den Führungsstiften 149 der Kontaktplatten eine Auslenkung der Kontaktplatten 147 und damit eine Bewegung der Kontaktplatten 147 in axialer Richtung r. Für eine geführte Bewegung der Kontaktplatten 147 bei der Auslenkung weist die Grundplatte 143 in ihrer dem Riegel 167 zugewandten Bodenwandung Aufnahmeschächte 125 zur Aufnahme der Kontaktplatten 147 auf. In diesen Aufnahmeschächten 125 sind die Kontaktplatten 147 gleitend verschiebbar gelagert. In der Mantelfläche 126 der Grundplatte 143 ist eine Schachtöffnung 127 angeordnet, sodass die Kontaktplatten 147 beim Durchführen der Expansionsbewegung über die Mantelfläche 126 der Grundplatte 143 hervorragen. Um die Rotationsbewegung des Riegels 167 zweckmäßig auf 90° um die Zentralachse z zu begrenzen, weist zur Ausbildung der Stoppmittel 163 der Aufnahmeschacht 125 im Bereich der Schachtöffnung 127 eine umlaufende Umrandung auf, sodass die Führungsstifte 149 der Kontaktplatten 147 anschlagen. Die Stoppelmittel 163 können durch einen geschlossen umlaufenden Umrandungssteg der Grundplatte 143 realisiert werden.

### Bezugszeichenliste

- 100: Haubenvorrichtung
- 110: Haube
- 111: Haubenplatte
- 112: Umrandung
- 113: Aussteifung
- 120: Haltevorrichtung
- 121: Achskopf
- 122: Achsschaft
- 123: Grundplattenvertiefung
- 124: Backenkörpervorsprung
- 125: Aufnahmeschacht
- 126: Grundplattenmantelfläche
- 127: Schachtöffnung
- 130: obere Haltemittel
- 131: Handgriff
- 133: Durchgang für Schlüssel
- 134: Handgriff-Kappe
- 135: Handgriff-Mulde
- 136: Schließzylinder
- 137: Adapter
- 138: Bodenwandung des Adapters
- 139: Schlossaufnahme
- 140: untere Haltemittel
- 141: Spreizbacken
- 142: Kraftschluss / Reibschluss
- 143: Grundplatte
- 144: Rückstellmittel
- 145: Rückstellnuten
- 146: Zentrierabsatz
- 147: Kontaktplatten
- 148: Kontaktfläche
- 149: Führungsstifte
- 150: Verbindungsmittel
- 151: Durchgang
- 152: oberes Achslager
- 153: Standfläche
- 154: oberer Verbindungskörper
- 155: Verbindungslaschen
- 156: Unterer Verbindungskörper
- 157: Löcher obere Montagemittel
- 158: Löcher untere Montagemittel bspw. für Drehachsen
- 159: magnetische Haftmittel
- 160: Stellmittel
- 161: Verbindungsachse, insbesondere Verbindungsstift
- 162: Montagelöcher der Grundplatte
- 163: Stoppmittel
- 164: Backenkörper
- 165: Spreiznocken
- 166: unteres Achslager
- 167: Riegel
- 168: Lager
- 169: Spreizbolzen
- 170: Ordnungssystem
- 171: Gerüst
- 172: Schiene
- 173: Haken
- 174: Halterippe
- 200: Schlüssel
- 300: Sattelkupplung
- 310: Sattelplatte
- 311: Ausschnitt
- 312: V-Öffnung
- 313: Hals
- 314: Aufnahme für Königszapfen
- 315: Sattelplattenoberfläche
- 316: Mantelfläche der Sattelplatte
- 317: Aufnahmeinnenwandung
- 320: Verriegelungsmechanismus
- a: Abstand in z-Richtung
- z: Zentralachse, axiale Richtung
- r: radiale Richtung
- X-X: Schnittlinie

## Patentansprüche

1. Haubenvorrichtung (100) für eine Sattelkupplung (300), insbesondere als Witterungsschutz für eine Sattelkupplung (300), wobei die Sattelkupplung (300) eine Sattelplatte (310) mit einer Aufnahme (314) für einen Königszapfen eines Aufliegers umfasst und wobei die Haubenvorrichtung (100) aufweist
- eine Haube (110) mit einer im Wesentlichen geschlossenen Platte (111) zum oberseitigen Abdecken der Sattelplatte (310) und vorzugsweise mit einer Umrandung (112) zum Umgeben der Sattelplatte (310),
- eine Haltevorrichtung (120) zum Koppeln der Haube (110) mit der Aufnahme (314), wobei die Haltevorrichtung (120) wiederrum
o ein oder mehrere obere Haltemittel (130) zum Halten oder Hintergreifen der Haube (110),
∘ ein oder mehrere untere Haltemittel (140) zum Halten oder Hintergreifen der Sattelplatte (310) und
∘ ein oder mehrere Verbindungsmittel (150) zum Verbinden der oberen Haltemittel (130) mit den unteren Haltemitteln (140) und zum Bereitstellen und/oder Überbrücken eines Abstands (a) zwischen der Haubenplatte (111) und der Sattelplatte (310)
aufweist,
**dadurch gekennzeichnet, dass**
die Haltevorrichtung (120) einen Betätigungsmechanismus aufweist, wobei mittels des Betätigungsmechanismus das oder die unteren Haltemittel (140) aus einer Ruhestellung in eine Haltestellung unter Ausbildung eines Kraftschlusses (142) und/oder Formschlusses zwischen den unteren Haltemitteln (140) und der Sattelplatte (310) expandiert werden können.

2. Haubenvorrichtung (100) nach Anspruch 1,
**dadurch gekennzeichnet, dass**
der Betätigungsmechanismus durch einen Handgriff (131) betätigbar ist, der den oberen Haltemitteln (130) der Haltevorrichtung (120) zugeordnet ist.

3. Haubenvorrichtung (100) nach einem der Ansprüche 1 oder 2,
**dadurch gekennzeichnet, dass**
die Haltevorrichtung (120) einen Verriegelungsmechanismus umfasst, wobei in einem entriegelten Zustand der Betätigungsmechanismus betätigbar ist und in einem verriegelten Zustand der Betätigungsmechanismus nicht betätigbar ist.

4. Haubenvorrichtung (100) nach einem der vorhergehenden Ansprüche,
**dadurch gekennzeichnet, dass**
der Betätigungsmechanismus ein Rückstellmittel (144) umfasst, wobei das Rückstellmittel (144) das oder die unteren Haltemittel (140) aus der Haltestellung in die Ruhestellung bewegen kann.

5. Haubenvorrichtung (100) nach einem der vorhergehenden Ansprüche,
**dadurch gekennzeichnet, dass**
durch den oder einen Handgriff (131) eine Rotationsbewegung im Betätigungsmechanismus bereitgestellt werden kann, wobei durch die Rotationsbewegung das oder die unteren Haltemittel (140) aus einer Ruhestellung in die Haltestellung expandiert werden können.

6. Haubenvorrichtung (100) nach Anspruch 5,
**dadurch gekennzeichnet, dass**
in einem entriegelten Zustand des Verriegelungsmechanismus der Handgriff (131) eine Rotation übertragend mit einem Verbindungsstift (161) verbunden ist und in einem verriegelten Zustand der Handgriff (131) relativ zu dem Verbindungsstift (161) frei rotiert.

7. Haubenvorrichtung (100) nach einem der Ansprüche 5 oder 6,
**dadurch gekennzeichnet, dass**
die Rotationsbewegung durch einen Verbindungsstift (161) übertragbar ist, wobei der Verbindungsstift (161) vollständig oder in einem Teilabschnitt einen nicht-runden Querschnitt aufweist.

8. Haubenvorrichtung (100) nach einem der vorhergehenden Ansprüche,
**dadurch gekennzeichnet, dass**
die unteren Haltemittel (140) längliche Spreizbacken (141) oder Kontaktplatten (147) umfassen, wobei die Spreizbacken (141) oder Kontaktplatten (147) eine zweckmäßig ausgebildete Kontaktfläche (148) aufweisen und zum Bereitstellen des Kraftschlusses (142) in einer radialen Richtung (r) gespreizt oder ausgelenkt werden können.

9. Haubenvorrichtung (100) nach einem der vorhergehenden Ansprüche,
**dadurch gekennzeichnet, dass**
die Haubenvorrichtung (100) ein Ordnungssystem (170) umfasst und die Haltevorrichtung (120) und/oder die Haube (110) mit dem Ordnungssystem (110) koppelbar ist, wenn die unteren Haltemittel (140) in einer Ruhestellung sind.

10. Haubenvorrichtung (100) nach Anspruch 9,
**dadurch gekennzeichnet, dass**
die Haltevorrichtung (120) eine Halterippe (174) zur Kopplung mit dem Ordnungssystem (170) in einer Ruhestellung der unteren Haltemittel (140) aufweist.
